# EUROPÄISCHE PATENTSCHRIFT

(11) **EP 3 163 979 B1**
(45) Veröffentlichungstag und Bekanntmachung des Hinweises auf die Patenterteilung: **23.12.2020**
(21) Anmeldenummer: 16195283.3
(22) Anmeldetag: 24.10.2016
(51) Int. Cl.: H05B 45/48, H05B 45/395

(54) **EIN LICHTMODUL UND EIN VERFAHREN ZUM BETREIBEN EINES LICHTMODULS**
LIGHT MODULE AND A METHOD FOR OPERATING A LIGHT MODULE
MODULE D'ÉCLAIRAGE ET PROCÉDÉ DE FONCTIONNEMENT D'UN MODULE D'ÉCLAIRAGE

(30) Priorität: 30.10.2015 DE 102015221358
(43) Veröffentlichungstag der Anmeldung: 03.05.2017
(73) Patentinhaber: Automotive Lighting Reutlingen GmbH, 72762 Reutlingen (DE)
(72) Erfinder: Bormann, Uwe, 89520 Heidenheim (DE); Blum, Dirk, 72076 Tübingen (DE); Reichenecker, Thomas, 72070 Tübingen (DE)
(74) Vertreter: DREISS Patentanwälte PartG mbB

(56) Entgegenhaltungen:
- EP-A1- 2 302 706
- EP-A1- 2 451 249
- DE-A1-102008 010 320
- DE-A1-102013 100 663

## Beschreibung

### Stand der Technik

Die Erfindung betrifft ein Lichtmodul nach dem Oberbegriff des Anspruchs 1 und ein Verfahren zum Betreiben eines Lichtmoduls nach einem nebengeordneten Anspruch.

Aus der DE 10 2008 021 534 A1 ist eine Beleuchtungseinrichtung bekannt, bei der einzelne Leuchtdioden oder einzelne Serienschaltungen von Leuchtdioden gesondert zu- und abschaltbar sind. Es ist eine Regelanordnung zum Regeln einer Betriebsspannung in Abhängigkeit von einer an einer Stromquelle anliegenden Spannung vorgesehen.

Aus der DE 10 2011 005 582 A1 ist eine Beleuchtungseinrichtung bekannt, bei der eine Serienschaltung von Lichtquellen über einen DC/DC-Schaltregler mit Strom versorgt wird. Über Lichtquellenindividuelle und parallel zu jeder Lichtquelle liegende Schaltelemente werden die jeweiligen Lichtquellen individuell ein- und ausgeschaltet. Die Schaltelemente werden mit einem Mikrocontroller gesteuert. Über eine Puls-Weiten-Modulation des Ansteuersignals können die Lichtquellen gedimmt werden.

Aus der DE 10 2009 060 791 A1 ist ein Lichtmodul für eine Beleuchtungseinrichtung bekannt, das mehrere in Reihe geschaltete Halbleiterlichtquellen umfasst. Parallel zu jeweils mindestens einer der Halbleiterlichtquellen ist eine der mindestens einen Halbleiterlichtquelle zugeordnete Schaltungsanordnung geschaltet. Im Falle eines detektierten Fehlers einer der Halbleiterlichtquellen wird die defekte Halbleiterlichtquelle durch Mittel zur Überbrückung überbrückt.

DE102008010320 offenbart eine lichtemittierende Vorrichtung mit einem DC/DC-Wandler, einer Strombegrenzungsschaltung zum Begrenzen eines Stroms von Halbleiter-Lichtquellen und eine jeweiligen Schaltvorrichtung zum Kurzschließen oder Öffnen einer jeweiligen Parallelverbindung zu den Halbleiter-Lichtquellen in Reaktion auf ein Schaltsignal.

DE102013100663 offenbart eine Konstantstromquelle, welche in Reihe mit strahlungsemmitierenden Halbleiterchips geschaltet ist.

EP2302706 offenbart eine Vielzahl von in Reihe geschalteten LEDs und ein FET, der als Konstantstromquelle fungiert. Schalter sind parallel zu den LEDs geschaltet. Eine Umschaltsteuerschaltung steuert die Schalter unabhängig von den Schaltsteuersignalen ein und aus und ändert alle Schalter von einem AUS-Zustand zu einem EIN-Zustand zu demselben Zeitpunkt. Damit soll es möglich sein, die Leuchtdichte der lichtemittierenden Vorrichtungen (LEDs) unabhängig einzustellen und zu verhindern, dass ein Überstrom durch die lichtemittierenden Vorrichtungen fließt.

EP2451249 offenbart ein Verfahren, welches umfasst: ein Beenden der Helligkeit von Halbleiterlichtquellen innerhalb einer Periode der Dauer des pulsbreitenmodulierten Signals. Die Halbleiter-Lichtquellen, deren Helligkeit eingestellt werden soll, werden an verschiedenen Punkten innerhalb der Periode der Dauer des pulsbreitenmodulierten Signals eingeschaltet und am gemeinsamen Punkt ausgeschaltet.

Des Weiteren sind Beleuchtungseinrichtungen für Kraftfahrzeuge bekannt, die Reihenschaltungen von Halbleiterlichtquellen aufweisen, die zur Erzeugung von Animationen, einer Dimmung oder aber Lichteffekten wie beispielsweise einem wischenden Blinker einzeln oder über mehrere Halbleiterlichtquellen hinweg überbrückbar sind. Diese Überbrückung wird mittels elektronischer Schalteinheiten beispielsweise Transistoren durchgeführt. Das Zu- und Wegschalten einzelner Halbleiterlichtquellen stellt damit einen hochtransienten Vorgang dar.

Steuergeräte, die zur Ansteuerung eines Lichtmoduls verwendet werden, können sich durch Vorgaben des Kraftfahrzeugherstellers von Beleuchtungseinrichtung zu Beleuchtungseinrichtung hinsichtlich ihres Strom-/Spannungsverhaltens sowie hinsichtlich ihrer Ausgangskapazität unterscheiden.
Aufgabe der Erfindung ist es daher, den Betrieb eines Lichtmoduls umfassend eine Reihenschaltung von überbrückbaren Halbleiterlichtquellen zu verbessern.

### Offenbarung der Erfindung

Die der Erfindung zu Grunde liegenden Aufgabe wird durch ein Lichtmodul nach dem Anspruch 1 und durch ein Verfahren zum Betreiben eines Lichtmoduls nach einem nebengeordneten Anspruch gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmal explizit hingewiesen wird.

Das Lichtmodul für eine Beleuchtungseinrichtung eines Kraftfahrzeugs umfasst in Reihe geschaltete, mittels einer jeweiligen Schalteinheit überbrückbare Halbleiterlichtquellen. Ein Linearregler ist in Reihe mit den Halbleiterlichtquellen geschaltet. Ein Schließvorgang einer oder mehrerer Schalteinheiten ist ermittelbar. Ein Widerstand des Linearreglers ist in Abhängigkeit von dem Schließvorgang erhöhbar. Vorteilhaft kann so durch die Kenntnis von dem Schließvorgang präemtiv oder gleichzeitig oder nachgelagert die abfallende Spannung erhöht werden, um Stromspitzen durch die Reihenschaltung zu verringern bzw. zu verhindern und gleichzeitig die Verlustleistung des Linearreglers zu verringern. Das Lichtmodul ist somit mit einem eine hohe Ausgangskapazität aufweisenden Steuergerät betreibbar und benötigt keine zusätzlichen Steuergeräte, die speziell an das Lichtmodul angepasst sind.

Bei einer vorteilhaften Ausführungsform ist der Widerstand in Abhängigkeit von dem Schließvorgang derart erhöhbar, so dass eine durch die Reihe von Halbleiterlichtquellen fließende Stromspitze begrenzbar ist. Vorteilhaft wird diese Stromspitze im Sinne der Begrenzung ganz vermieden. Bei einer vorteilhaften Ausführungsform umfasst der Schließvorgang ein Schließen einer Anzahl von Schalteinheiten zu einem im Wesentlichen gleichen Zeitpunkt. Die Erhöhung des Widerstands wird in Abhängigkeit von der Anzahl ermittelt. Mit dem kann vorteilhaft ein geplanter Schließvorgang zur Erhöhung der über den Linearregler abfallenden Spannung benutzt werden.

In einer vorteilhaften Ausführungsform wird der Schließvorgang mehrerer Schalteinheiten zu einem im Wesentlichen gleichen Zeitpunkt derart koordiniert, dass die jeweiligen Schließvorgänge zeitlich zueinander beabstandet durchgeführt werden.

In einer vorteilhaften Ausführungsform findet der Schließvorgang einer oder mehrerer Schalteinheiten zwischen einem ersten und zweiten Zeitpunkt statt. Eine Referenzspannung wird in Abhängigkeit von einer ersten Anzahl zu dem ersten Zeitpunkt betriebener Halbleiterlichtquellen und einer zweiten Anzahl zu dem zweiten Zeitpunkt betriebener Halbleiterlichtquellen ermittelt. Der Linearregler wird in Abhängigkeit von der Referenzspannung betrieben. Vorteilhaft kann durch die Ermittlung der ersten Anzahl und der zweiten Anzahl auf eine Reduktion der Anzahl der zu dem zweiten Zeitpunkt betriebenen Halbleiterlichtquellen geschlossen werden. Vorteilhaft kann der Linearregler damit bereits vor dem Schaltvorgang bzw. Schließvorgang der entsprechenden Schalteinheit mit der entsprechenden Referenzspannung betrieben werden. Mit hin ist es möglich, die Ermittlung der Referenzspannung für den Linearregler im gewissen Umfang zeitlich von dem tatsächlich stattfindenden Schaltvorgang zu entkoppeln und damit den Betrieb des Linearreglers genauer auf den Schaltvorgang bzw.

Schließvorgang der Schalteinheiten abzustimmen. Insbesondere lassen sich dadurch Verlustleistungen reduzieren.
In einer vorteilhaften Ausführungsform wird die Referenzspannung zusätzlich in Abhängigkeit von einer Gesamtspannung, die zu dem ersten Zeitpunkt an der Reihenschaltung der Halbleiterlichtquellen abfällt, ermittelt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Für funktionsäquivalente Größen und Merkmale werden in allen Figuren auch bei unterschiedlichen Ausführungsformen die gleichen Bezugszeichen verwendet. In der Zeichnung zeigen:
- Fig. 1: zeigt eine Beleuchtungseinrichtung für ein Kraftfahrzeug in schematischer Form;
- Fig. 2: zeigt in schematischer Form ein Lichtmodul mit einem zugeordneten Steuergerät;
- Fig. 3 u. 5: zeigen jeweils ein schematisches Spannungs-Zeit-Diagramm;
- Fig. 4: zeigt ein schematisches Strom-Zeit-Diagramm; und
- Fig. 6: zeigt ein schematisches Ablaufdiagramm.

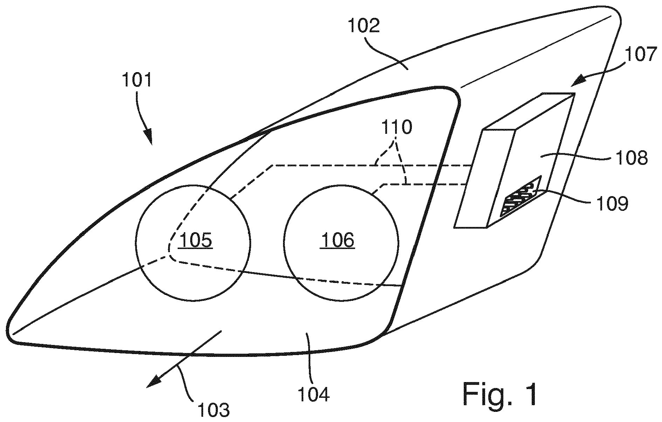

In Figur 1 ist eine Beleuchtungseinrichtung für Kraftfahrzeuge in ihrer Gesamtheit mit dem Bezugszeichen 101 bezeichnet. Die Beleuchtungseinrichtung 101 ist in dem dargestellten Ausführungsbeispiel als ein Kraftfahrzeugscheinwerfer ausgebildet. Selbstverständlich kann die Beleuchtungseinrichtung 101 auch als eine Leuchte oder ähnliches, die am Heck oder seitlich am Kraftfahrzeug angeordnet ist, ausgebildet sein. Insbesondere ist die Beleuchtungseinrichtung 101 ein Blinker für das Kraftfahrzeug. Der Scheinwerfer 101 umfasst ein Gehäuse 102, das vorzugsweise aus Kunststoff gefertigt ist. In einer Lichtaustrittsrichtung 103 weist das Scheinwerfergehäuse 102 eine Lichtaustrittsöffnung auf, die durch eine transparente Abdeckscheibe 104 verschlossen ist. Die Abdeckscheibe 104 ist aus farblosem Kunststoff oder Glas gefertigt. Die Scheibe 104 kann ohne optisch wirksame Profile (zum Beispiel Prismen) als sogenannte klare Scheibe ausgebildet sein. Alternativ kann die Scheibe 104 zumindest bereichsweise mit optisch wirksamen Profilen, die insbesondere eine Streuung des hindurch tretenden Lichts in horizontaler Richtung bewirken, versehen sein.

Im Inneren des Scheinwerfergehäuses 102 sind in dem dargestellten Ausführungsbeispiel zwei Lichtmodule 105, 106 angeordnet. Die Lichtmodule 105, 106 sind fest oder relativ zu dem Gehäuse 102 bewegbar angeordnet. Durch eine Relativbewegung der Lichtmodule 105, 106 zum Gehäuse 102 in horizontaler Richtung kann beispielsweise eine dynamische Kurvenlichtfunktion realisiert werden. Bei einer Bewegung der Lichtmodule 105, 106 um eine horizontale Achse, also in vertikaler Richtung, kann eine Leuchtweitenregelung realisiert werden. Die Lichtmodule 105, 106 sind zur Erzeugung einer gewünschten Lichtverteilung, beispielsweise einer Abblendlicht-, einer Fernlicht-, einer Stadtlicht-, einer Landstraßenlicht-, einer Autobahnlicht-, einer Nebellicht-, einer statischen oder dynamischen Kurvenlicht- oder einer beliebig anderen statischen oder adaptiven Lichtverteilung ausgebildet. Die Lichtmodule 105, 106 erzeugen die gewünschte Lichtfunktion entweder alleine oder in Kombination miteinander, indem die von jedem einzelnen Lichtmodul 105; 107 gelieferten Teillichtverteilungen zu der gewünschten Gesamtlichtverteilung überlagert werden. Die Lichtmodule 105, 106 können als Reflexionsmodule und/oder als Projektionsmodule ausgebildet sein. Selbstverständlich können in dem Scheinwerfergehäuse 102 auch mehr oder weniger als die dargestellten zwei Lichtmodule 105, 106 vorgesehen sein.

An der Außenseite des Scheinwerfergehäuses 102 ist ein Steuergerät 107 in einem Steuergerätegehäuse 108 angeordnet. Selbstverständlich kann das Steuergerät 107 auch an einer beliebig anderen Stelle des Scheinwerfers 101 angeordnet sein. Insbesondere kann für jedes der Lichtmodule 105, 106 ein eigenes Steuergerät vorgesehen sein, wobei die Steuergeräte integraler Bestandteil der Lichtmodule 105, 106 sein können. Selbstverständlich kann das Steuergerät 107 auch entfernt vom dem Scheinwerfer 101 angeordnet sein. Das Steuergerät 107 dient zur Steuerung und/oder Regelung der Lichtmodule 105, 106 bzw. von Teilkomponenten der Lichtmodule 105, 106, wie beispielsweise von Lichtquellen der Lichtmodule 105, 106. Die Ansteuerung der Lichtmodule 105, 106 bzw. der Teilkomponenten durch das Steuergerät 107 erfolgt über Verbindungsleitungen 110, die in Figur 1 durch eine gestrichelte Linie lediglich symbolisch dargestellt sind. Über die Leitungen 110 erfolgt eine Versorgung der Lichtmodule 105, 106 mit elektrischer Energie. Die Leitungen 110 sind durch eine Öffnung im Scheinwerfergehäuse 102 in das Steuergerätegehäuse 108 geführt und dort an die Schaltung des Steuergerätes 107 angeschlossen. Falls mehrere Steuergeräte als integraler Bestandteil der Lichtmodule 105, 106 vorgesehen sind, können die Leitungen 110 und kann die Öffnung in dem Scheinwerfergehäuse 102 entfallen.

Zur besseren EMV-Abschirmung besteht das Steuergerätegehäuse 108 aus einem elektrisch leitfähigen Material, insbesondere aus Metall, vorzugsweise aus Aluminium-Druckguss. Ebenfalls zur besseren EMV-Abschirmung sind die Leitungen 110 abgeschirmt, insbesondere mittels eines die Leitungen 110 umgebenden Metallgeflechts oder eines Metall-Kunststoff-Geflechts. In dem Steuergerätegehäuse 108 ist des Weiteren eine Öffnung vorgesehen, in der ein Stecker-/Buchsenelement 109 angeordnet ist. Über das Stecker-/Buchsenelement 109 kann das Steuergerät 107 mit einem übergeordneten Steuergerät (zum Beispiel einen sogenannten Body-Controller) und/oder einer Energieversorgung des Kraftfahrzeugs (zum Beispiel einer Fahrzeugbatterie) verbunden sein.

Die Lichtmodule 105, 106 der Beleuchtungseinrichtung 101 nutzen als Lichtquellen insbesondere mehrere in Reihe geschaltete Halbleiterlichtquellen, insbesondere Leuchtdioden (LEDs). LED-Scheinwerfer 101, die eine Vielzahl von LEDs aufweisen, finden verstärkt Einsatz. Durch Aus- und Einschalten einzelner LEDs oder einzelner LED-Gruppen können variable Lichtverteilungen erzielt werden. Üblicherweise sind jeweils mehrere LEDs in einer Reihenschaltung (auch Zweig oder Kette) geschaltet.

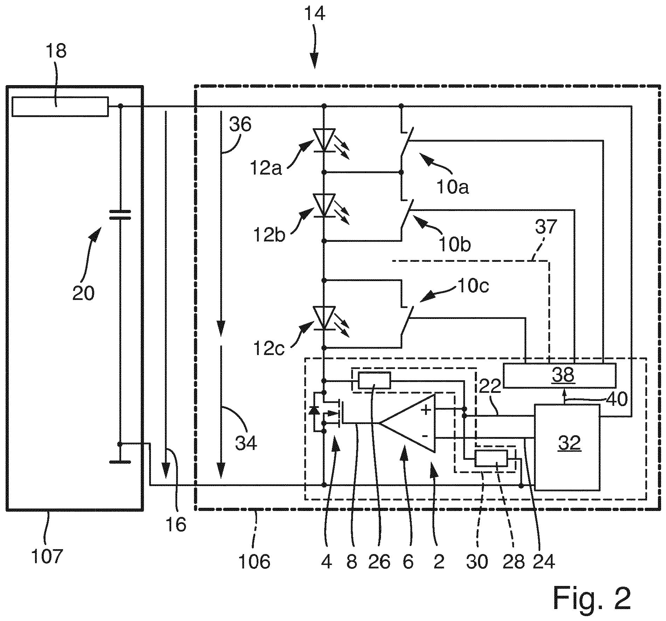

Figur 2 zeigt in schematischer Form das Lichtmodul 106, das an das Steuergerät 107 angeschlossen ist. Das Lichtmodul 106 umfasst einen Linearregler 2, der eine Steuereinheit 4 und einen Operationsverstärker 6 umfasst. Der Operationsverstärker 6 erzeugt ein Stellsignal 8, das der Steuereinheit 4 zugeführt wird. Die Steuereinheit 4 ist vorliegend als n-Kanal MOSFET ausgeführt und der Gate-Elektrode wird das Steuersignal 8 zugeführt. Der Linearregler 2 ist mit einer Reihenschaltung von Halbleiterlichtquellen 12 in Reihe geschaltet. Parallel zu jeder Halbleiterlichtquelle 12 ist eine jeweilige Schalteinheit 10 geschaltet, mittels derer die jeweilige Halbleiterlichtquelle 12 überbrückbar ist. Es ergibt sich so eine Reihenschaltung 14 der Halbleiterlichtquellen 12 mit dem Linearregler 2. Am Ausgang des Steuergeräts 107 fällt eine Ausgangsspannung 16 ab. Des Weiteren umfasst das Steuergerät 107 eine Stromquelle 18 und einen Ausgangskondensator 20. Bei einem Öffnen eines der Schalter 10 wird durch die Ladung auf dem Ausgangskondensator 20 und das Regelverhalten des Steuergeräts 107 eine Stromspitze verursacht, die mittels der nachfolgend erläuterten Funktion des Linearreglers 2 ohne wesentliche Leistungsverluste kompensiert wird. Eine Kompensation kann eine Reduktion oder Auslöschung dieser Stromspitzen bedeuten.

Dem Operationsverstärker 6 wird eine Rückkoppelspannung 22 und eine Referenzspannung 24 zugeführt. Ein Widerstand 26 und ein Widerstand 28 bilden einen Spannungsteiler, an dessen Mittenabgriff die Rückkoppelspannung 22 zur Verfügung steht. Die Anordnung der Widerstände 26 und 28 ist auch als Rückkoppelnetzwerk 30 bezeichenbar.

Eine Einheit 32 erzeugt die Referenzspannung 24 in Abhängigkeit von der Ausgangsspannung 16, die mittels der Einheit 32 ermittelbar ist, und in Abhängigkeit von der Rückkoppelspannung 22, die ein Maß für eine Spannung 34 ist, die über die Steuereinheit 4 abfällt. Die Ausgangsspannung 16 setzt sich aus der Spannung 34 und einer Spannung 36, die über die Reihenschaltung von Halbleiterlichtquellen 12 abfällt, zusammen. Wie durch die gestrichelte Linie 37 angedeutet ist, kann die Reihenschaltung von Halbleiterlichtquellen 12 mehr als die drei dargestellten Halbleiterlichtquellen 12a-12c umfassen. Die Schalteinheiten 10 werden durch eine Treiberstufe 38 betrieben. Hierzu wird von der Einheit 32, die beispielsweise als Mikrocontroller ausgebildet ist, der Treiberstufe 38 ein entsprechendes Signal 40 zugeführt. In einer anderen Ausführungsform wird das Signal 40 nicht von der Einheit 32 sondern einer weiteren, nicht dargestellten Einheit ermittelt. Die Einheit 32 hat jedoch Kenntnis von den Schaltvorgängen hinsichtlich der Schalteinheiten 10, insbesondere hinsichtlich der jeweiligen Schließvorgänge. Wird also ein Schließvorgang zumindest einer Schalteinheit 10 ermittelt, so wird der Linearregler 2 derart betrieben, dass sich die Spannung 34 zumindest kurzzeitig so erhöht, so dass eine durch die Reihe von Halbleiterlichtquellen 12 fließende Stromspitze begrenzbar ist, wobei die Begrenzung auch ein vollständiges Auslöschen der Stromspitze bedeuten kann. Insbesondere wird hierbei der Widerstand des Linearreglers 2 erhöht.

Dadurch wird ein Schließvorgang, der ein Schließen eines oder mehrerer Schalteinheiten 10 zu einem im Wesentlichen gleichen Zeitpunkt umfasst, ermittelt. Insbesondere wird eine Anzahl der zu schließenden Schalteinheiten 10 ermittelt. Im Falle mehrerer Schalteinheiten 10, die zu einem Schließvorgang vorgesehen sind, können mittels des Signals 40 die einzelnen Schließvorgänge der Schalteinheiten 10 koordiniert werden. Beispielsweise können die jeweiligen Schließvorgänge einzelner Schalteinheiten 10 zeitlich voneinander beabstandet durchgeführt werden, wobei ein Abstand beispielsweise im Mikrosekundenbereich liegt, der zu keinem sichtbaren Effekt führt, jedoch Vorteile bei der Ausregelung der Stromspitze durch die Erhöhung des Widerstands hat.
Des Weiteren ist es möglich, die Erhöhung des Widerstandes mittels des Linearreglers 2 in Abhängigkeit von der Anzahl der zu schließenden Schalteinheiten 10 zu ermitteln. Ist kein Schließvorgang geplant, so kann in einem entsprechenden Normalbetrieb der Widerstand des Linearreglers auf null bestimmt werden, womit keine Verlustleistung in der Steuereinheit 4 abfällt. Darüber hinaus ist in diesem Zug keine Veränderung der Referenzspannung 24 nötig, was ebenso für ein Öffnen einer oder mehrerer Schalteinheiten 10 gilt. Mittels des Rückkoppelnetzwerks 30 findet eine Regelung der Spannung 34 statt.

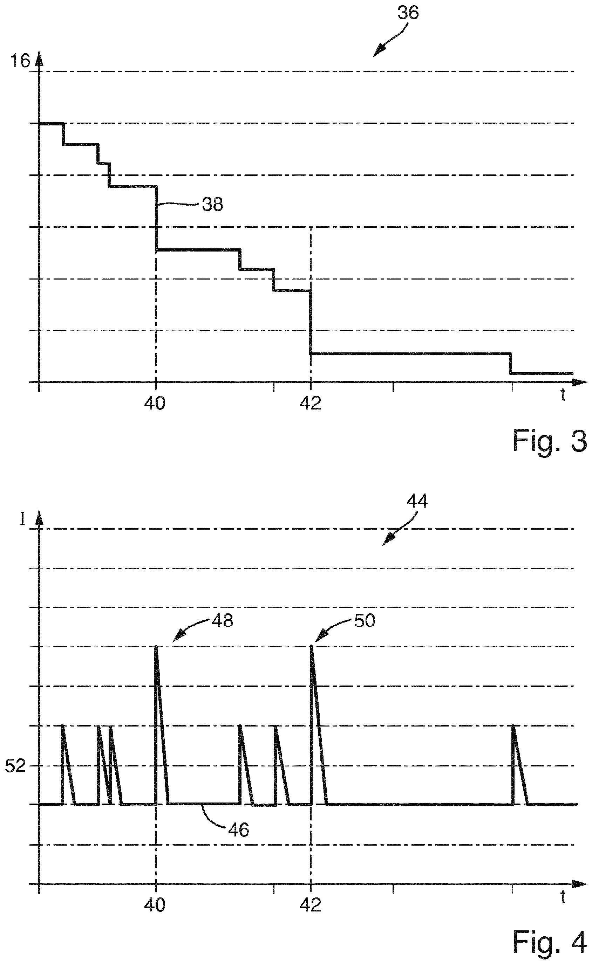

In Figur 3 ist ein schematisches Spannungs-Zeit-Diagramm 36 gezeigt. Es ist die Ausgangsspannung 16 über der Zeit t aufgetragen. Gemäß einem Spannungsverlauf 38 werden einzelne oder mehrere Halbleiterlichtquellen 12 mittels der zugeordneten Schalteinheit 10 überbrückt und das zugeordnete Steuergerät 107 stellt die Spannung 16 entsprechend ein. So werden beispielsweise zum Zeitpunkt 40 gleichzeitig drei Halbleiterlichtquellen 12 überbrückt. Gleiches gilt für den Zeitpunkt 42. Zu den anderen Zeitpunkten wird jeweils nur eine Halbleiterlichtquelle 12 überbrückt. Der Stromverlauf 38 in Figur 4 stellt die Situation dar, bei der die Reihenschaltung von Halbleiterlichtquellen 12 ohne den Linearregler 2 zwischen den Ausgang des Steuergeräts 107 geschaltet ist.

Figur 4 zeigt ein schematisches Strom-Zeit-Diagramm 44. Es ist ein Strom I über der Zeit t aufgetragen. Ein Stromverlauf 46 zeigt den Strom durch eine Reihenschaltung von Halbleiterlichtquellen 12, die direkt an den Ausgang des Steuergeräts 107 ohne den Linearregler 2 angeschlossen ist. Es ergeben sich entsprechend Stromspitzen, wie beispielsweise die Stromspitzen 48 und 50 zu den Zeitpunkten 40 und 42, die sich oberhalb eines Stromgrenzwertes 52 befinden. Für Ströme oberhalb des Stromgrenzwertes 52 wird eine Beschädigung der noch betriebenen Halbleiterlichtquellen 12 erwartet. Im gezeigten Beispiel würde diese erwartete Beschädigung bereits beim Überbrücken von nur einer Halbleiterlichtquelle 12 vorliegen.

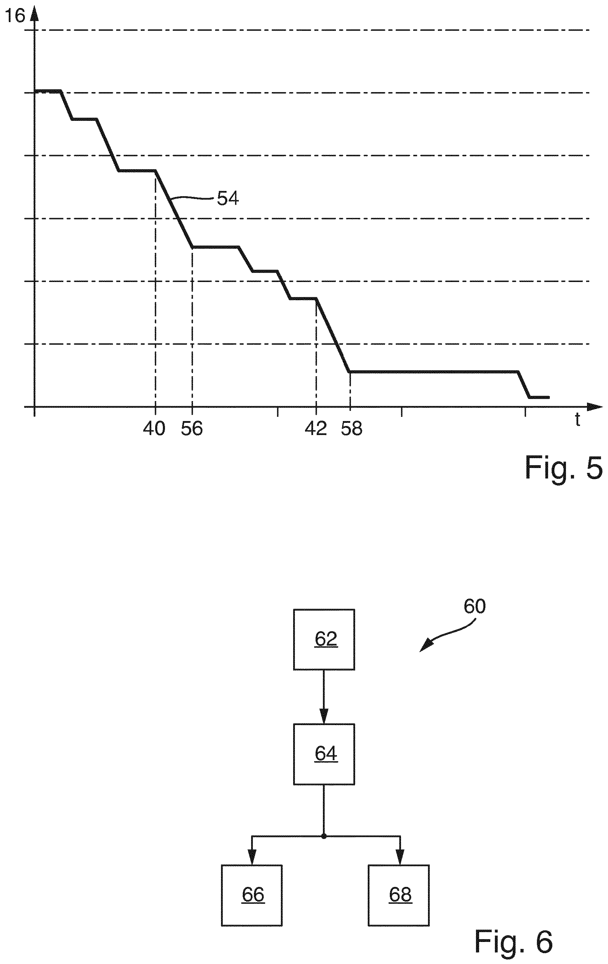

Figur 5 zeigt ein schematisches Spannungs-Zeit-Diagramm, bei dem die Ausgangsspannung 16 über der Zeit t aufgetragen ist. Ein Spannungsverlauf 54 zeigt im Gegensatz zu dem Spannungsverlauf 38 aus Figur 4 die Situation, wie sie bei dem Vorsehen des Linearreglers 2 in Reihe mit den Halbleiterlichtquellen 12 in Zusammenwirken mit dem Regelverhalten des Steuergeräts 107 auftritt. So ergibt sich beispielsweise ausgehend von dem Zeitpunkt 40 bei einer Überbrückung von drei Halbleiterlichtquellen 12 kein abrupter Spannungsabfall, sondern es wird bis zu einem Zeitpunkt 56 die Spannung 60 linear herabgesetzt. Gleiches gilt für die Abschaltung und Überbrückung von drei Halbleiterlichtquellen 12 zum Zeitpunkt 42. Die lineare Herabsetzung ist nur beispielhaft und kann selbstverständlich auch einen nicht-linearen Verlauf annehmen.

Durch ein Schließen einer Schalteinheit 10 erhöht sich die Spannung in der Reihenschaltung 14 von Halbleiterlichtquellen 12 unvermittelt. Durch diesen plötzlich entstehenden Spannungsunterschied wird der Linearregler wie oben beschrieben betrieben und der Ausgangskondensator des zugeordneten Steuergeräts 107 entlädt sich nicht unmittelbar. Durch den in Reihe mit den Halbleiterlichtquellen 12 geschalteten und nach den hier vorgestellten Verfahren betriebenen Linearregler 2 kommt es zu keinem erhöhten Stromimpuls durch die Reihenschaltung von Halbleiterlichtquellen 12.

Ausgehend vom Zeitpunkt 42 wird bis zu einem Zeitpunkt 58 die Spannung linear herabgesetzt. Dies wird dadurch erreicht, dass der Linearregler 2 bei der Erkennung eines Abfalls der Spannung 16 oder der Spannung über die Halbleiterlichtquellen 12 die überbrückte bzw. überbrückten Halbleiterlichtquellen 12 durch einen entsprechend eingestellten Widerstand ersetzt, der innerhalb eines Zeitfensters idealerweise auf Null Ohm herabgesetzt wird. Hierdurch wird garantiert, dass der vom Steuergerät 107 eingestellte bzw. eingeregelte Strom durch die Reihenschaltung 14 den Stromgrenzwert 52 nicht überschreitet.

Die Herabsetzung der Spannung innerhalb einer Reglerzeit von 5 ms ergibt sich aus einer Wiederholfrequenz von 200 Hz. Die Einschaltzeiten der Halbleiterlichtquellen sind dann zwischen 0 und 5 ms je nach gewünschter Helligkeit. Selbstverständlich sind auch höhere Wiederholfrequenzen im Bereich zwischen 300 Hz und 1000 Hz denkbar, womit sich kürzere Reglerzeiten ergeben.

Figur 6 zeigt ein schematisches Ablaufdiagramm 60. In einem ersten Schritt 62 wird eine erste Anzahl von zu einem ersten Zeitpunkt betriebener Halbleiterlichtquellen 12 bestimmt. Des Weiteren kann die Spannung 36, die zu dem ersten Zeitpunkt über die Reihenschaltung der Halbleiterlichtquellen 12 abfällt, ermittelt werden.
In einem zweiten Schritt 64 wird eine zweite Anzahl zu einem zweiten Zeitpunkt betriebener Halbleiterlichtquellen 12 ermittelt. Zwischen dem ersten und dem zweiten Zeitpunkt findet der Schließvorgang der einen oder mehreren Schalteinheiten 10 statt. Aus der Differenz der zum ersten und zum zweiten Zeitpunkt betriebenen Halbleiterlichtquellen 12 kann beispielsweise mittels einer Kennlinie bzw. einer Tabelle in einem vierten Schritt 66 die Referenzspannung 24 mittels der Einheit 32 ermittelt und an den Linearregler 2 weitergegeben werden. Die Referenzspannung 24 kann zusätzlich noch in Abhängigkeit von der Spannung, die zu dem ersten Zeitpunkt über die Reihenschaltung der Halbleiterlichtquellen 12 abfällt, ermittelt werden.

Vor, nach oder parallel zu dem Schritt 66 kann in einem vierten Schritt 68 eine Koordinierung der einzelnen Schließvorgänge der Schalteinheiten 10 koordiniert werden, beispielsweise durch eine zeitliche Beabstandung der einzelnen Schließvorgänge.

Vorteilhaft kann durch die beschriebenen Verfahren das Steuergerät 107 den Strom für die Reihenschaltung 14 ohne größere Über- oder Unterschwingungen ausregeln. Darüber hinaus ist dadurch, dass der erhöhte Spannungsabfall der Spannung 34 nur für einen kurzen Zeitraum vorherrscht, eine verringerte Verlustleistung erreichbar. Dieser kurze Zeitraum bestimmt sich durch die maximale Regelgeschwindigkeit des Linearreglers 2 und ist damit von dem verwendeten Baustein abhängig.

Ist ein Schaltvorgang umfassend ein Schließen zumindest eines der Schalteinheiten 10 abgeschlossen, wird die Spannung 34 auf Null Volt reduziert. Hierdurch kann zusätzlich die Verlustleistung verringert werden.

## Patentansprüche

1. Ein Lichtmodul (106) für eine Beleuchtungseinrichtung (101) eines Kraftfahrzeugs umfassend in Reihe geschaltete, mittels einer jeweiligen Schalteinheit (10) überbrückbare Halbleiterlichtquellen (12), wobei ein Linearregler (2) in Reihe mit den Halbleiterlichtquellen (12) geschaltet ist, wobei ein Schließvorgang, der ein Schließen mehrerer Schalteinheiten (10) zu einem gleichen Zeitpunkt umfasst, und eine Anzahl der zu schließenden Schalteinheiten (10) ermittelbar sind,
**dadurch gekennzeichnet, dass** der Linearregler (2) dazu ausgebildet ist, bei einer Erkennung eines Abfalls einer Ausgangsspannung (16) eines an das Lichtmodul (106) angeschlossenen Steuergeräts (107) oder einer Spannung über die Halbleiterlichtquellen (12) beim Schließvorgang überbrückte Halbleiterlichtquellen (12) durch einen Widerstand derart zu ersetzen, dass eine an der Reihenschaltung von Halbleiterlichtquellen (12) und Linearregler (2) anliegende Spannung innerhalb eines Zeitfensters linear herabsetzt wird.

2. Das Lichtmodul (106) nach dem Anspruch 1, wobei eine durch die Reihe von Halbleiterlichtquellen (12) fließende Stromspitze (48) begrenzbar ist.

3. Das Lichtmodul (106) nach einem der vorstehenden Ansprüche, wobei der Schließvorgang mehrerer Schalteinheiten (10) derart mittels einer Einheit (32) koordinierbar ist, dass die jeweiligen Schließvorgänge zeitlich beabstandet durchführbar sind.

4. Das Lichtmodul (106) nach einem der vorstehenden Ansprüche, wobei eine Referenzspannung (24) in Abhängigkeit von einer ersten Anzahl zu einem ersten Zeitpunkt betriebener Halbleiterlichtquellen (12) und einer zweiten Anzahl zu einem zweiten Zeitpunkt betriebener Halbleiterlichtquellen (12) mittels der Einheit (32) ermittelbar ist, wobei zwischen dem ersten und zweiten Zeitpunkt der Schließvorgang einer oder mehrerer Schalteinheiten (10) stattfindet, und wobei der Linearregler (2) in Abhängigkeit von der Referenzspannung (24) betreibbar ist.

5. Das Lichtmodul (106) nach dem vorstehenden Anspruch, wobei die Referenzspannung (24) zusätzlich in Abhängigkeit von einer Spannung (36), die zu dem ersten Zeitpunkt über die Reihenschaltung der Halbleiterlichtquellen (12) abfällt, mittels der Einheit (32) ermittelbar ist.

6. Ein Verfahren zum Betreiben eines Lichtmoduls (106) für eine Beleuchtungseinrichtung (101) eines Kraftfahrzeugs umfassend in Reihe geschaltete, mittels einer jeweiligen Schalteinheit (10) überbrückbare Halbleiterlichtquellen (12), wobei ein Linearregler (2) in Reihe mit den Halbleiterlichtquellen (12) geschaltet ist, wobei ein Schließvorgang, der ein Schließen mehrerer Schalteinheiten (10) zu einem gleichen Zeitpunkt umfasst, und eine Anzahl der zu schließenden Schalteinheiten (10) ermittelt werden, **dadurch gekennzeichnet, dass** der Linearregler (2) bei einer Erkennung eines Abfalls einer Ausgangsspannung (16) eines an das Lichtmodul (106) angeschlossenen Steuergeräts (107) oder einer Spannung über die Halbleiterlichtquellen (12) beim Schließvorgang überbrückte Halbleiterlichtquellen (12) durch einen Widerstand derart ersetzt, dass eine an der Reihenschaltung von Halbleiterlichtquellen (12) und Linearregler (2) anliegende Spannung innerhalb eines Zeitfensters linear herabgesetzt wird.

7. Das Verfahren nach dem vorstehenden Anspruch, das zum Betreiben eines Lichtmoduls (106) nach einem der Ansprüche 2 bis 5 ausgebildet ist.

## Claims

1. A light module (106) for a lighting device (101) of an automobile, comprising semiconductor light sources (12) connected in series and adapted to be bridged by a respective switching unit (10), a linear controller (2) being connected in series with the semiconductor light sources (12), wherein a closing process comprising closing of multiple switching units (10) at the same time and a number of the switching units (10) to be closed can be determined, **characterized in that** the linear controller (2) is configured such that, when detecting a drop of an output voltage (16) of a controller (107) connected to the light module (106) or of a voltage across the semiconductor light sources (12), it replaces semiconductor light sources (12) bridged during the closing process by a resistor in such a way that a voltage applied to the series connection of semiconductor light sources (12) and linear controller (2) is linearly lowered with a time frame.

2. The light module (106) as claimed in claim 1, wherein a current peak (48) flowing through the array of semiconductor light sources (12) can be limited.

3. The light module (106) as claimed in one of the preceding claims, wherein the closing process of multiple switching units (10) can be coordinated by means of a unit (32) in such a way that the respective closing processes can be performed in time intervals.

4. The light module (106) as claimed in one of the preceding claims, wherein a reference voltage (24) can be determined by means of the unit (32) depending on a first number of semiconductor light sources (12) operated at a first point in time and a second number of semiconductor light sources (12) operated at a second point in time, wherein between the first and the second point in time the closing process of one or multiple switching units (10) occurs, and wherein the linear controller (2) can be operated depending on the reference voltage (24).

5. The light module (106) as claimed in the preceding claim, wherein the reference voltage (24) can be determined additionally by means of the unit (32) depending on a voltage (36) which drops across the series connection of the semiconductor light sources (12) at the first point in time.

6. A method for operating a light module (106) for a lighting device (101) of an automobile, comprising semiconductor light sources (12) connected in series and adapted to be bridged by a respective switching unit (10), a linear controller (2) being connected in series with the semiconductor light sources (12), wherein a closing process comprising closing of multiple switching units (10) at the same time and a number of the switching units (10) to be closed are determined, **characterized in that** the linear controller (2), when detecting a drop of an output voltage of a controller (107) connected to the light module (106) or of a voltage across the semiconductor light sources (12), replaces semiconductor light sources (12) bridged during the closing process by a resistor in such a way that a voltage applied to the series connection of semiconductor light sources (12) and linear controller (2) is linearly lowered with a time frame.

7. The method as claimed in the preceding claim, configured for operating a light module (106) as claimed in one of claims 2 to 5.

## Revendications

1. Module d'éclairage (106) pour un dispositif d'éclairage (101) d'un véhicule automobile, comprenant des sources lumineuses semiconductrices (12) connectées en série et configurées pour pouvoir être pontées à l'aide d'une unité de commutation (10) respective, un régulateur linéaire (2) étant connecté en série avec les sources lumineuses semiconductrices (12), une action de fermeture comprenant une fermeture de plusieurs unités de commutation (10) à un même moment et un nombre d'unités de commutation (10) à fermer pouvant être déterminés, **caractérisé en ce que** le régulateur linéaire (2) est configuré pour remplacer, en cas de détection d'une chute de tension de sortie (16) aux bornes d'un appareil de commande (107) relié au module d'éclairage (106) ou d'une tension aux bornes des sources lumineuses semiconductrices (12), des sources lumineuses semiconductrices (12) pontées lors de l'action de fermeture par une résistance de telle sorte qu'une tension présente aux bornes de la connexion en série de sources lumineuses semiconductrices (12) et du régulateur linéaire (2) soit diminuée de manière linéaire à l'intérieur d'un laps de temps.

2. Module d'éclairage (106) selon la revendication 1, un pic de courant (48) passant par la série de sources lumineuses semiconductrices (12) pouvant être limité.

3. Module d'éclairage (106) selon l'une des revendications précédentes, l'action de fermeture de plusieurs unités de commutation (10) pouvant être coordonnée à l'aide d'une unité (32) de façon telle que les actions de fermeture respectives puissent être effectuées de manière espacée dans le temps.

4. Module d'éclairage (106) selon l'une des revendications précédentes, une tension de référence (24) pouvant être déterminé à l'aide de l'unité (32) en fonction d'un premier nombre de sources lumineuses semiconductrices (12) fonctionnant à un premier moment et d'un deuxième nombre de sources lumineuses semiconductrices (12) fonctionnant à un deuxième moment, l'action de fermeture d'une ou de plusieurs unités de commutation (10) se produisant entre le premier et le deuxième moment, et le régulateur linéaire (2) pouvant être fait fonctionner en fonction de la tension de référence (24).

5. Module d'éclairage (106) selon la revendication précédente, la tension de référence (24) pouvant en plus être déterminée à l'aide de l'unité (32) en fonction d'une tension (36) qui chute au premier moment sur les bornes de la connexion en série des sources lumineuses semiconductrices (12).

6. Procédé de fonctionnement d'un module d'éclairage (106) pour un dispositif d'éclairage (101) d'un véhicule automobile, comprenant des sources lumineuses semiconductrices (12) pouvant être pontées à l'aide d'une unité de commutation (10) respective et étant connectées en série, un régulateur linéaire (2) étant connecté en série avec les sources lumineuses semiconductrices (12), une action en fermeture qui comprend une fermeture de plusieurs unités de commutation (10) à un même moment et un nombre d'unités de commutation (10) à fermer pouvant être déterminés, **caractérisé en ce que** le régulateur linéaire (2) remplace, en cas de détection d'une chute de tension de sortie (16) aux bornes d'un appareil de commande (107) relié au module d'éclairage (106) ou d'une tension aux bornes des sources lumineuses semiconductrices (12), des sources lumineuses semiconductrices (12) pontées lors de l'action de fermeture, par une résistance de telle sorte qu'une tension présente aux bornes de la connexion en série de sources lumineuses semiconductrices (12) et du régulateur linéaire (2) soit diminuée de manière linéaire à l'intérieur d'un laps de temps.

7. Procédé selon la revendication précédente qui est formé pour le fonctionnement d'un module l'éclairage (106) selon l'une des revendications 2 à 5.
